Europäisches Patentamt

European Patent Office

Office européen des brevets

(19)

(11) **EP 0 761 778 A1**

(12) **EUROPEAN PATENT APPLICATION**

(43) Date of publication:
    **12.03.1997 Bulletin 1997/11**

(21) Application number: **96305713.8**

(22) Date of filing: **02.08.1996**

(51) Int Cl.6: **C09D 7/00**, C09D 5/02, C09G 1/04

(84) Designated Contracting States:
    **DE FR GB IT**

(30) Priority: **14.08.1995 US 2267**

(71) Applicant: **ROHM AND HAAS COMPANY**
    **Philadelphia, Pennsylvania 19106-2399 (US)**

(72) Inventors:
    • **Snyder, Barry Samuel**
      **Dresher, Pennsylvania 19025 (US)**
    • **Sanborn, Timothy Parker**
      **Huntersville, North Carolina 28078 (US)**

(74) Representative: **Angell, David Whilton et al**
    **ROHM AND HAAS**
    **European Operations Patent Department**
    **Lennig House**
    **2 Mason's Avenue**
    **Croydon CR9 3NB (GB)**

(54) **Method for providing gloss control of latex films and compositions for use therein**

(57)     A method for providing gloss control in a dried film from an aqueous coating and compositions useful for gloss control is provided. A specified level of gloss is affected by the addition of hard latex polymer particles to soft film-forming polymer latex particles. By adjusting the hard particle parameters of amount and relative particle size, the desired film gloss can be achieved while allowing for the optimization of other performance characteristics.

## Description

The present invention relates to a method for providing gloss control of a film formed from an aqueous, or latex, coating composition, and aqueous coating compositions suitable for use therein. The gloss of a dried polymer film is a key appearance parameter, and the ability to control the gloss is important in coating applications such as paints, varnishes and floor polishes.

U.S. Patent Number 4,734,295 discloses a method useful in providing glare control from a reflective-transmissive surface, such as an electronic viewing screen. The method in the '295 patent involves applying a coating composition having organic polymeric particles and a flattening agent to the surface of the screen, then allowing the composition to dry. This procedure produces surface irregularities in the dried film which disperse light, producing an anti-glare effect. The anti-glare effect is controlled by a second step which involves the addition of an inert fluid to the dried film, partially covering some of the surface irregularities and reducing the anti-glare effect. Glare control in the '295 patent is similar to the control of gloss in a film, since both involve surface irregularities created by particles in a dry polymer film, the film being useful in reducing the reflectance of light from a surface.

U.S. Patent Number 3,398,018 discloses a composition for producing low gloss, or matte, films by adding large plastic spheres to a film-forming latex polymer. The large hard plastic spheres create surface roughness which disperses light, thus reducing the gloss of the dried film.

The problem with previous methods and compositions for controlling gloss is that they do not provide predictable, one-step control over a full range of desired gloss. The method disclosed in the '295 patent has the disadvantages that it involves a two-step process and the control is through a trial-and-error addition or subtraction of an inert second coating, until the desired level of light reflectance is achieved. The composition disclosed in the '018 patent is useful only for providing low gloss, where the 60 degree gloss measurement is less than 16. The '018 composition also has the disadvantage of producing an undesirable rough surface due to the use of very large plastic spheres, of greater than 3 microns.

We have found that a specified, or predetermined degree of film gloss can be obtained by admixing hard latex polymer particles of selected relative size and amount with film-forming soft latex polymer particles in an aqueous coating composition. This single admixing of these hard and soft particles produces a full range of gloss levels, from high gloss to low gloss, in a dried film formed from the coating composition.

The present invention provides the additional advantage of producing a dried film without noticeable surface roughness. The present invention also provides flexibility in the formulating of an aqueous coating composition having any desired gloss level.

In the first aspect of the present invention, there is provided a method for providing a specified level of gloss of a dried film of an aqueous coating composition comprising admixing from 1 percent to 60 percent hard polymer particles, by weight polymer solids, with soft polymer particles; both said hard particles and soft particles having particle sizes in the range of from 30 nanometers to 1,000 nanometers; said hard particles having a glass transition temperature in the range of from 35°C to 160°C, and where the glass transition temperature of said hard particles is greater than the glass transition temperature of said soft particles.

In the second aspect of the present invention, there is provided an aqueous coating composition comprising hard polymer particles and soft polymer particles, where said hard and soft particles are in the range of from 30 nanometers to 1,000 nanometers in size;

where said hard particles: are present at from 1 percent to 60 percent by weight of polymer solids; are non-film-forming; and have a Tg in the range of from 35°C to 160°C;
where said soft particles: are present at from 40 percent to 99 percent by weight of polymer solids; are film-forming; and have a Tg in the range of from -30°C to +75°C, providing the Tg of the hard particles is greater than the Tg of the soft particles.

In the third aspect of the present invention, there is provided a surface bearing a dried film of an aqueous coating composition where the aqueous coating composition comprises hard polymer particles and soft polymer particles, where said hard and soft particles are in the range of from 30 nanometers to 1,000 nanometers in size; where said hard particles are present at from 1 percent to 60 percent, by weight of polymer solids, are non-film-forming and have a Tg in the range of from 35°C to 160°C; where said soft particles are present at from 40 percent to 99 percent, by weight of polymer solids, are film-forming and have a Tg in the range of from -30°C to +75°C, providing the Tg of the hard particles is greater than the Tg of the soft particles.

By "gloss" herein is meant the relative amount and nature of mirror-like, or specular, reflection of a dried film formed from an aqueous coating composition, as measured at an incident angle of 20 degrees and 60 degrees.

By "hard particle" herein is meant a latex polymer particle with a glass transition temperature (Tg) greater than the minimum temperature required for the coating composition to form a film, herein after referred to as the "Minimum Film Formation Temperature" or "MFT". Hard particles of this invention have a Tg between 35°C and 160°C and are above the MFT. The Tg of the hard polymer used in the invention is greater than the Tg of the soft polymer.

By "soft particle" herein is meant a film-forming latex polymer particle which is capable of forming a continuous film with other soft particles upon drying. Film-forming particles are those with a MFT at or below the ambient temperature. The MFT of a polymer may be lowered by use of coalescents. Coalescents are volatile organic solvents which lower the MFT of the polymer, thereby permitting the coating to form a useful film at a temperature below the Tg of the polymer. Preferably, the film-forming polymer contains at least one polymeric component with a Tg between -30°C and +75°C. Most preferably the Tg of the film-forming polymer is in the range of from +10°C to +35°C. Preferred is drying under ambient conditions.

By "matte finish" herein is meant a dry coating surface which displays little or no gloss when observed at any angle.

The hard and soft particles in this invention may be homo-polymers or copolymers, single or multistage, or mixtures of such polymers. The latex particles may be synthesized by conventional polymerization techniques well known in the art. By "latex" herein is meant a stable dispersion of polymer particles in an essentially aqueous medium. The latex polymer particles made be made in an aqueous medium, or may be made in another medium then dispersed in an aqueous medium. A preferred method of polymerization is by conventional emulsion polymerization. Polymers useful in the invention are not limited to any particular chemistry or physical shape, and may be mixtures of such polymers.

The hard and soft particles of this invention may be prepared by the polymerization of at least one ethylenically unsaturated monomer such as, for example, esters of (meth)acrylic acid, vinyl esters, styrene, butadiene, and vinyl monomers such as vinyl chloride, vinylidene chloride, N-vinyl pyrollidone; acrylonitrile or methacrylonitrile and ethylene. Polar monomers such as (meth)acrylic acid, itaconic acid, acrylonitrile, dimethylaminoethyl (meth)acrylate, and hydroxyethyl (meth)acrylate may also be incorporated into the polymer at from 0 percent to 12 percent of the total monomer.

Both the hard and soft particles of this invention have particle size diameters in the range of from 30 nanometers to 1,000 nanometers. A preferred particle size is from 50 nanometers to 750 nanometers. The hard particles are in the range of from thirty times larger to thirty times smaller than the soft particles. A preferred hard particle size is from six times larger to six times smaller than the soft particle size.

An increase in the gloss level of a dried polymer film from an aqueous coating composition may be effected in a predictable manner by admixing small hard particles with large soft particles. The film gloss is increased as the amount of hard particles in the coating compositions increased from 1 percent to 15 percent, by weight of polymer solids. The hard particles are from two to thirty times smaller in size than the soft particles. Preferably the hard particles are from two to six times smaller than the soft particles. The hard particles are in the range of from 30 nanometers to 250 nanometers and the soft particles are in the range of from 150 nanometers to 1,000 nanometers in size.

A decrease in the gloss level of a dried polymer film from an aqueous coating composition may be effected in a predictable manner by 1) admixing small hard particles with large soft particles between 15 percent and 40 percent hard particles by weight; 2) admixing hard particles with soft particles of approximately the same size (unimodal) between 15 percent and 60 percent hard particles by weight; and 3) admixing large hard particles with small soft particles between 1 percent and 60 percent hard particles by weight.

In an aqueous coating composition having small hard particles and large soft particles, dried film gloss is decreased as the amount of small hard particles in the coating composition is increased between 15 percent to 40 percent by weight of polymer solids. The hard particles are in the range of from 30 nanometers to 250 nanometers in size. The soft particles are in the range of from 150 nanometers to 1,000 nanometers in size. Preferably the soft particle size is between 200 nanometers and 750 nanometers. The hard particles are from two to thirty times smaller than the soft particles. Preferably the hard particles are from two to six times smaller than the soft particles.

In an aqueous coating composition having hard particles and soft particles of about equal size, or unimodal, dried film gloss is decreased as the amount of hard particles in the coating composition is increased from 15 percent to 60 percent by weight of polymer solids. By unimodal herein is meant that the hard particles are between half the size and twice the size of the soft particles. Preferably, the hard and soft particles are nearly equal in size. The particle size of both the hard and soft particles is in the range of from 50 nanometers to 750 nanometers. Preferably, both hard and soft particles are from 75 nanometers to 500 nanometers in size.

In aqueous coating compositions having large hard particles and small soft particles, dried film gloss decreases as the amount of large hard particles in the coating composition is increased from 1 percent to 60 percent by weight of polymer solids. The hard particles are in the range of from 150 nanometers to 1,000 nanometers in size. Preferably the hard particle size is between 200 nanometers and 750 nanometers. The soft particles are in the range of from 30 nanometers to 250 nanometers in size. The large hard particles are from two times to thirty times larger than the soft particles. Preferably the hard particles are from two times to six times larger than the soft particles.

Aqueous coating compositions of this invention are typically prepared by conventional techniques which are well known in the coatings art. First, adjuvants such as, for example, defoamer, pigment and cosolvent are well-dispersed in water. Then polymers are admixed into the aqueous blend under low-shear stirring along with other coating adjuvants as desired. The polymers of this invention may be added in any order to the formulation. The aqueous coating composition may contain, in addition to the polymers, conventional additives such as, for example, pigments, coalescing agents, extenders, emulsifiers, thickeners, humectants, plasticizers, fillers, curing agents, wetting agents, biocides, anti-foaming agents, colorants, waxes, and anti-oxidants.

The aqueous coating composition of this invention can be used to formulate a variety of coatings including, for example, latex paints for architectural and industrial uses, caulks, sealants, varnishes, inks, paper coatings, coatings for fabric and nonwoven fibers, leather coatings, and floor polishes or sealers for floor coverings. One such example is the use of the aqueous coating composition as a matte floor polish.

Flexibility in formulating an aqueous coating of a specified gloss level is provided by selecting hard particles at a certain amount and relative particle size.

The coatings of this invention may be applied to the surface of a wide variety of substrates, such as, for example, wood, paper, fiber, glass, ceramics, plaster, stucco, asphalt, vinyl tiles, plastics, leather, and concrete.

Test Methods:

The gloss of a dried film of a coating composition is determined by measuring the specular gloss, as described herein below. The measured gloss is a relative specular reflectance of the coating surface compared to that of a standard (as per ASTM D 523, an optically smooth black glass tile with a refractive index $n = 1.567$ was used) with reflectances measured at incident angles of 20 degrees and 60 degrees, using the equation:

$$\text{Gloss} = \text{Reflectance of Coating} / \text{Reflectance of Standard} \times 100$$

Measurement of Gloss:

A draw down of the test sample on black glass was made with a 0.0254 centimeter (10 mil) gap blade and dried at 25°C and 50 % relative humidity for 24 hours. The specular gloss was measured using a GLOSSGARD II Glossmeter (Hunter Associates Laboratory, Inc. ) as per ASTM D 523-89, at angles of reflection of 20 degrees and 60 degrees.

The polymers in Examples 1 through 3 were prepared by standard emulsion polymerization. Polymer particle sizes were measured by light scattering using a Brookhaven BI-90 Particle Sizer. Glass transition temperatures were either measured by differential scanning calorimetry (DSC) and reported as the midpoint of the transition, or calculated from the Fox equation:

$$1/Tg \text{ (copolymer)} = 1/Tg \text{ (monomer A)} + 1/Tg \text{ (monomer B)} + 1/Tg \text{ (monomer n), etc.}$$

The hard and soft polymer emulsions were admixed in the percentages indicated and stirred to produce a homogeneous blend.

Example 1

Example 1 shows the effect on film gloss of admixing small hard particles with large soft particles. The hard particles were synthesized by emulsion polymerization from a monomer composition of 46% butyl methacrylate, 3% methacrylic acid and 51% methylmethacrylate. The hard particles were 100 nanometers in size with a Tg of 60°C. The emulsion was 44.7% solids.

The soft polymer particles were synthesized from a monomer composition of 52% butyl acrylate, 46% methylmethacrylate, and 2% methacrylic acid. The soft film-forming polymer particles were 394 nanometers in size with a Tg of 2°C. The emulsion was 44.5% solids. The hard and soft polymer emulsions were blended as indicated and gloss was measured on films drawn from the admixture.

TABLE 1

| Small Hard / Large Soft Particle Admixture | | |
|---|---|---|
| Weight Fraction Hard Mode (%) | Gloss 20° | Gloss 60° |
| 0 | 5 | 34 |
| 10 | 73 | 82 |
| 20 | 68 | 81 |

TABLE 1   (continued)

| Small Hard / Large Soft Particle Admixture | | |
|---|---|---|
| Weight Fraction Hard Mode (%) | Gloss 20° | Gloss 60° |
| 30 | 42 | 63 |
| 40 | 20 | 51 |

The results show that gloss increases as hard particles are added between 1 percent and 10 percent by weight, reaching a maximum in gloss between 10 percent and 20 percent by weight of small hard particles. Gloss is decreased by additional small hard particles between 20 percent and forty percent by weight.

Example 2

Example 2 shows the effect on film gloss of admixing hard particles and soft particles of equal size (unimodal) in a coating composition. The hard particles were synthesized from a monomer composition of 27% butyl acrylate, 72% methylmethacrylate and 2% methacrylic acid. The hard particles were 122 nanometers in size and had a Tg of 42°C. The emulsion was 45.1% solids. The hard and soft polymer emulsions were blended as indicated and gloss was measured on films drawn from the admixture.

The soft particles were synthesized from a monomer composition of 65% butyl acrylate, 33% methylmethacrylate and 2% methacrylic acid. The soft particles were 118 nanometers in size and had a Tg of -17°C. The emulsion was 44.9% solids.

TABLE 2

| Unimodal Hard/Soft Particle Admixture | | |
|---|---|---|
| Weight Fraction Hard Mode (%) | Gloss 20° | Gloss 60° |
| 0 | 73 | 82 |
| 10 | 57 | 81 |
| 20 | 37 | 76 |
| 30 | 33 | 75 |
| 40 | 26 | 66 |
| 50 | 19 | 59 |
| 60 | 15 | 52 |

The results show a decrease in gloss as the percentage of hard polymer particles is increased between 0 and 60 percent by weight of hard particles.

Example 3

Example 3 shows the effect on film gloss of admixing large hard particles with small soft particles. The hard particles were synthesized from a monomer composition of 3% butyl acrylate, 95% methylmethacrylate, and 2% methacrylic acid. The hard particles were 497 nanometers in size with a Tg of 80°C. The emulsion was 44.8% solids.

The soft polymer particles were synthesized from a monomer composition of 46% butyl methacrylate, 3% methacrylic acid and 51% methylmethacrylate. The emulsion was 44.7% solids. The soft particles were 100 nanometers in size with a Tg of 60°C, coalesced with 15% by weight based on polymer solids of Dowanol PPH (Dow Chemicals). The hard and soft polymer emulsions were blended as indicated and gloss was measured on films drawn from the admixture.

TABLE 3

| Large Hard /Small Soft Particle Admixture | | |
|---|---|---|
| Weight Fraction Hard Mode (%) | Gloss 20° | Gloss 60° |
| 0 | 58 | 83 |
| 10 | 55 | 79 |
| 20 | 49 | 74 |

TABLE 3   (continued)

| Large Hard /Small Soft Particle Admixture | | |
|---|---|---|
| Weight Fraction Hard Mode (%) | Gloss 20° | Gloss 60° |
| 30 | 39 | 68 |
| 40 | 23 | 58 |
| 50 | 8 | 40 |
| 60 | 3 | 17 |

The results show a decrease in gloss as the percentage of large hard particles is increased from 1 percent to 60 percent by weight of polymer solids.

Example 4

Polymer blends of large hard particles and small soft particles were formulated into floor polish compositions. Polymer A is a 40% solids emulsion polymer synthesized from 95% methylmethacrylate, 3% butyl acrylate and 2% acrylic acid. The polymer had a particle size of 580 nanometers and a Tg of 80°C. Polymer B is a 38% emulsion polymer synthesized from 45% methylmethacrylate, 45% n-butyl methacrylate and 10% methacrylic acid. The polymer had a particle size of 90 nanometers and a Tg of 69°C.

Preparation of floor polish compositions:

The following materials were blended at low-shear blending by a magnetic stirring bar for 5 minutes.

| Blend | A (50%) | B (40%) | C (30%) | D (20%) |
|---|---|---|---|---|
| Water | 67.10 | 66.92 | 66.74 | 66.58 |
| Wetting aid (1% solids) | 1.00 | 1.00 | 1.00 | 1.00 |
| Defoamer | 0.02 | 0.02 | 0.02 | 0.02 |
| Cosolvent | 2.50 | 2.50 | 2.50 | 2.50 |
| Cosolvent | 2.50 | 2.50 | 2.50 | 2.50 |
| Leveling Aid | 1.50 | 1.50 | 1.50 | 1.50 |

To these blends was added the following ingredients with continued stirring.

| | | | | |
|---|---|---|---|---|
| Polymer A<br>Particle size = 580 nm<br>Tg = 80°C | 16.64 | 12.98 | 9.74 | 6.49 |
| Polymer B<br>Particle size = 90 nm<br>Tg = 69°C | 16.64 | 20.50 | 23.91 | 27.33 |
| Wax | 3.90 | 3.90 | 3.90 | 3.90 |
| Wax | 4.40 | 4.40 | 4.40 | 4.40 |

The blends were stirred for one hour before application. Each blend was applied to a black vinyl tile at the rate of 4 milliliters per 930 square centimeters with a Mohair applicator. The tile were cured overnight at 25°C and 50% relative humidity. A visual measurement was made of each tile.

Results:

| A | B | C | D |
|---|---|---|---|
| Very Matte | Very Matte | Matte | Less Matte |

The results show that the gloss of a floor polish can be controlled by the addition of large hard particles to small soft particles. Gloss is decreased (matte finish is increased) as the percentage of large hard particles in the floor polish is increased relative to the small soft particles.

**Claims**

1. A method for providing a specified level of gloss in a dried film from an aqueous coating composition comprising admixing from 1 percent to 60 percent hard polymer particles, by weight polymer solids, with soft polymer particles; both said hard and soft polymer particles having particle sizes in the range of from 30 nanometers to 1,000 nanometers; said hard polymer particles having a glass transition temperature in the range of from 35°C to 160°C; and where the glass transition temperature of said hard polymer particles is greater than the glass transition temperature of said soft polymer particles.

2. The method of Claim 1 for providing an increased level of gloss wherein said hard particles are:

   present at from 1 percent to 15 percent by weight of polymer solids;
   from two times smaller to thirty times smaller than the soft particles; and from 30 nanometers to 250 nanometers in size.

3. The method of Claim 2 wherein said hard particles are from two to six times smaller than said soft particles.

4. The method of Claim 1 for providing a decreased level of gloss wherein said hard particles are:

   present at from 15 percent to 60 percent by weight of polymer solids;
   from two times larger to thirty times smaller than said soft particles; and from 30 nanometers to 750 nanometers in size.

5. The method of Claim 4 wherein said hard particles are:

   present at from 15 percent to 40 percent by weight of polymer solids;
   from two times smaller to thirty times smaller than the soft particles; and from 30 nanometers to 250 nanometers in size.

6. The method of Claim 1 for providing a decreased level of gloss wherein said hard particles are from two times larger to thirty times larger than said soft particles and are in the range of from 150 nanometers to 1000 nanometers in size.

7. The method of Claim 6 wherein said hard particles are from two to six times larger than said soft particles.

8. An aqueous coating composition comprising hard polymer particles and soft polymer particles;

   where said hard and soft particles are in the range of from 30 nanometers to 1,000 nanometers in size;
   where said hard particles are: present at from 1 percent to 60 percent by weight of polymer solids; non-film-forming; and have a Tg in the range of from 35°C to 160°C;
   where said soft particles are: present at from 40 percent to 99 percent by weight of polymer solids; film-forming; and
   where the Tg of the hard particles is greater than the Tg of the soft particles.

9. A surface bearing a dried film of an aqueous coating composition, said aqueous coating composition comprising hard polymer particles and soft polymer particles;

   where said hard and soft particles are in the range of from 30 nanometers to 1,000 nanometers in size;
   where said hard particles are present at from 1 percent to 60 percent by weight of polymer solids, are non-film-forming, and have a Tg in the range of from 35°C to 160°C;
   where said soft particles are present at from 40 percent to 99 percent by weight of polymer solids and are film-forming; and
   where the Tg of the hard particles is greater than the Tg of the soft particles.

10. The surface bearing a dried film of Claim 9 where said dried film is a matte floor polish, wherein the hard particles are from two to thirty times larger than the soft particles and are greater than 150 nanometers in size..

**European Patent Office**

## EUROPEAN SEARCH REPORT

Application Number

EP 96 30 5713

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 277 385 (CARROLL, H. E. ET AL.) <br> * claims 1,3 * <br> --- | 1,4,6-9 | C09D7/00 <br> C09D5/02 <br> C09G1/04 |
| X | EP-A-0 021 621 (SCM CO.) <br> * claim 1 * <br> --- | 1,4,6-9 | |
| A | US-A-4 684 675 (COLLIER, C. P. ) <br> * claims 1,3 * <br> --- | 1 | |
| A | AU-A-24 934 (BERGER PAINTS) <br> * claim 1 * <br> ----- | 1 | |
| | | | TECHNICAL FIELDS SEARCHED (Int.Cl.6) <br><br> C09D <br> C09G |

The present search report has been drawn up for all claims

| Place of search | Date of completion of the search | Examiner |
|---|---|---|
| THE HAGUE | 27 November 1996 | Beyss, E |

EPO FORM 1503 03.82 (P04C01)